# EUROPÄISCHE PATENTSCHRIFT

(11) **EP 4 251 423 B1**
(45) Veröffentlichungstag und Bekanntmachung des Hinweises auf die Patenterteilung: **25.09.2024**
(21) Anmeldenummer: 21811393.4
(22) Anmeldetag: 25.11.2021
(51) Int. Cl.: B32B 27/36, C08K 3/04, C08K 3/36, B32B 27/20, B32B 15/09, B29C 45/00

(54) **ZUR VERWENDUNG ALS REFLEKTOR GEEIGNETER MULTILAGENAUFBAU**
MULTILAYERED BODY FOR USE AS A REFLECTOR
ENSEMBLE DE COUCHES UTILISATION POUR UTILISATION COMME RÉFLECTEUR

(30) Priorität: 30.11.2020 EP 20210706
(43) Veröffentlichungstag der Anmeldung: 04.10.2023
(73) Patentinhaber: Covestro Deutschland AG, 51373 Leverkusen (DE)
(72) Erfinder: HUNGERLAND, Tim, 51063 Köln (DE); PROTTE, Rainer, 41542 Dormagen (DE)
(74) Vertreter: Levpat
(86) Internationale Anmeldenummer: PCT/EP2021/082972
(87) Internationale Veröffentlichungsnummer: WO 2022/112405

(56) Entgegenhaltungen:
- EP-A1- 3 115 405
- EP-A1- 3 502 306
- WO-A1-2020/193386

## Beschreibung

Die Erfindung betrifft eine Schichtenanordnung, umfassend eine Substratschicht und eine Metallschicht, wobei die Substratschicht eine hohe Oberflächengüte, minimierte thermische Ausdehnungskoeffizienten sowie gute Wärmeleitfähigkeiten aufweist. Die thermoplastische Substratschicht besteht aus einer Polycarbonat-basierten Zusammensetzung.

Aufgrund ihrer hohen Wärmeformbeständigkeit eignen sich Polycarbonat- und davon insbesondere Copolycarbonat-basierte Formmassen besonders gut für Bauteile, die hohen Umgebungstemperaturen sowie potentiellen "Hotspots" ausgesetzt sind. Insbesondere Scheinwerfer-Reflektoren und weitere Komponenten in Scheinwerfern, aber auch z.B. Spiegeloptiken in Head Up-Displays, die im Autoinnenraum verbaut sind, erfahren aufgrund der abgestrahlten Wärme des Leuchtmittels (z.B. LED durch die Halbleiter, Xenon, Halogen) bzw. durch Sonneneinstrahlung hohe Temperaturen und dürfen dabei weder ihre thermomechanischen Eigenschaften noch ihre Form verändern.

Temperaturstabilität bedeutet vor allem die Eigenschaft des Materials, sich bei Temperaturveränderungen (insbesondere Hotspots durch Sonneneinstrahlung) geometrisch nicht signifikant zu verändern. Diese Eigenschaft wird bei Polymeren durch den Zusatz von meist großen Mengen Füllstoff mit einem niedrigen thermischen Ausdehnungskoeffizienten erreicht.

Der Einsatz von großen Mengen Füllstoff in Polycarbonat führt aber zu einer deutlichen Abnahme der Fließeigenschaften, was wiederum zu gewissen Grenzen in der Verarbeitbarkeit des Materials führt. Dieses ist insbesondere im Hinblick auf herausfordernde Bauteilgeometrien (Wandel von monolithischem zu multi-Refraktor-Design mit immer kleineren Funktionseinheiten), wie bei Substratschichten von Scheinwerferreflektoren, problematisch.

Da es sich bei Scheinwerferreflektoren auch um Bauteile mit sehr hohen Qualitätsanforderungen an die Metalloberfläche handelt, muss die darunterliegende Substratschicht auch eine sehr hohe Oberflächenqualität, gemessen anhand der Rauigkeit der Substratoberfläche und dem damit verbundenen Glanz, aufweisen. Im Vergleich zu ungefüllten Polymeren ist eine sehr hohe Oberflächenqualität bei Füllstoff-enthaltenden Materialien nur durch eine besondere Verarbeitung, die dynamische Werkzeugtemperierung, wie in EP 2 785 794 A1 beschrieben, zu gewährleisten. Hierbei lassen sich je nach Füllstoffart und Füllstoffgehalt unterschiedliche Qualitäten erreichen.

Die thermische Ausdehnung eines Bauteils und die damit verbundene Stabilität einer Lichtoptischen Projektion, welche in Reflektoren und Head up-Displays essentiell ist, ist auch von der materialintrinsischen Fähigkeit zur Wärmeverteilung/-ableitung abhängig. Diese Eigenschaft ist bei reinen Polymeren (Isolatoren) praktisch kaum vorhanden. Auch hier kann durch den Zusatz von geeigneten Füllstoffen, die selbst eine hohe Wärmeleitfähigkeit aufweisen, die Wärmeleitfähigkeit der gesamten Formmasse deutlich verbessert werden. Der Zusatz entsprechender Füllstoffe in herkömmlichen Zusammensetzungen geht aber zu Lasten der maximal erreichbaren Oberflächengüte, selbst unter Verwendung von dynamischer Werkzeugtemperierung. Weiterhin werden auch das Fließverhalten der Polymerschmelze, messbar anhand der Schmelzeviskosität der Formmasse, sowie die Duktilität des Formteils, je nach Menge und Art des Füllstoffes, signifikant erniedrigt.

Aufgrund immer höherer Anforderungen an Design und Performance bei Automobil-Scheinwerfern geht ein Trend in Richtung Multilagen-Hybrid-Aufbauten. Solche Aufbauten umfassen eine Schicht oder einen Körper aus einem metallischen Material, z.B. Aluminium oder Magnesium, das als Wärmesenke (Heat sink) fungiert, einem darauf aufgebrachten thermoplastischen Material mit hoher Oberflächengüte sowie einer weiteren Reflexionsschicht aus Metall. Bei der Kombination solcher Materialien sollte das thermoplastische Material einen zum Metall ähnlichen thermischen Ausdehnungskoeffizienten aufweisen, um einen möglichst synchronen thermisch induzierten Verzug zu erreichen und somit eine dauerhafte Anhaftung zu gewährleisten. Dieses kann nach bisherigem Stand nur durch hochgefüllte Thermoplaste erreicht werden, da Metall, z.B. Aluminium, einen Ausdehnungskoeffizienten von < 30 ppm/K hat und reine Thermoplasten einen thermischen Ausdehnungskoeffizienten von > 60 ppm/K aufweisen. Eine Möglichkeit, solche Metall-Thermoplast-Hybride zu ersetzen, wäre die Kombination aus zwei (gleichen oder unterschiedlichen) Thermoplasten, bei denen das eine Material eine sehr hohe Wärmeleitfähigkeit aufweisen müsste und damit als Wärmesenke fungierte. Das zweite Material wäre ungefüllt und würde damit die nötige Oberflächengüte für die Reflexionsschicht liefern.

Multilagen-Hybrid-Aufbauten zur Herstellung von Formteilen wie Reflektoren oder Spiegelelemente sind bereits bekannt. EP3502306 A1 betrifft einen Mehrschichtkörper, der I) eine Substratschicht (S), II) eine damit direkt verbundene Metallschicht (M) und III) gegebenenfalls eine auf der Metallschicht liegende Schutzschicht (P) umfasst, wobei die Substratschicht eine Zusammensetzung umfasst, erhältlich durch Mischen der Komponenten A) bis D), wobei A) ist ein Polycarbonat, B) ein unbeschlichteter Talk, C) mindestens ein anhydridmodifiziertes α-Olefin-Polymer und optional D) ein Teil der Menge an Komponente B) durch mindestens einen weiteren Füllstoff ausgewählt aus der Gruppe bestehend aus einem expandierten Graphit mit einem Teilchendurchmesser D50 von kleiner 800µm oder eine Mischung aus dem vorgenannten expandiertem Graphit mit nicht expandiertem Graphit und einem Bornitrid als weiterer Füllstoff ersetzt werden kann, wobei im Falle des Graphits bis zu 8 Gew.-Teile der Menge an Komponente B) ersetzt werden können und wobei im Falle des Bornitrids bis zu 15 Gew.-Teile der Menge an Komponente B) ersetzt werden können, wobei die Mengen der Komponenten B) und C) vor der Vermischung mit Komponente C) so aufeinander abgestimmt sind, dass pro 10 Gewichtsteile der Komponente B) 0,10 bis 1,4 Gewichtsteile der Komponente C) eingesetzt werden und wobei die Zusammensetzung frei ist von Pfropfpolymerisaten und Polyestern..

Die Mehrschichtkörper werden verwendet zur Herstellung von Formteilen wie Reflektoren sowie (Gehäuse-)Bauteilen von Licht- und Wärmequellen und Displays. Formteile sind beispielsweise Lampenfassungen, Lampenabdeckungen, Lichtsammelsysteme, Kollimatoren, weiterhin bedampfte Displays, eine bedampfte Scheibe, eine Linsenhalterung, ein Lichtleiterelement, ein LED-Sockel, ein LED-Reflektor, eine Wärmesenke, ein Kühlelement oder ein Solar-Reflektor und ein Automobilteil. Bei den Automobilteilen handelt es sich bevorzugt um Bezels, Scheinwerfereinhausung und Blinker.

Den Erfindern der vorliegenden Anmeldung kam jedoch ein weiterer Gedanke eines in seiner Funktion alternativen Bauteils, das sowohl in der Bauteil-Herstellung als auch im Sinne einer späteren Rezyklierbarkeit deutlich attraktiver wäre. Wenn es gelänge, ein Material zu identifizieren, das sowohl die nötige Wärmeleitfähigkeit zum Einsatz als Wärmesenke aufweist als auch gleichzeitig die nötige Oberflächenqualität des Oberflächenmaterials bietet, könnten neuartige Reflektoren im 1-Komponenten-Spritzguss mit nachfolgender Metallisierung hergestellt werden.

Die Herausforderung liegt jedoch in der Kombination aller zuvor genannten Eigenschaften: Insbesondere für hochpräzise Licht-Optiken, die heutzutage auf LED- und Laser-Technologien basieren, ist die Maximierung der Lichtstabilität ein zentrales Merkmal für mehr Sicherheit im Straßenverkehr. Auch die Realisierbarkeit komplexerer Geometrien und somit innovativer Designs, was ein entsprechende Fließfähigkeit des Materials verlangt, stellt hohe Anforderungen an ein solches Material. Darüber hinaus müssen Oberflächen mit hoher Oberflächengüte erzielbar sein. Es war somit Aufgabe, entsprechende Schichtenanordnungen, auch genannt Lagenaufbauten, welche die zuvor genannten Anforderungen erfüllen und in ihrem Aufbau einfacher als die herkömmlichen Multilagen-Hybrid-Aufbauten mit ihren zuvor genannten drei wesentlichen Kernschichten sind, bereitzustellen. Dabei hat sich überraschend gezeigt, dass mittels bestimmter thermoplastischer Zusammensetzungen eine Realisierung über 1-K-Spritzgusstechnologie mit dynamischer Werkzeugtemperierung mit anschließender Metallisierung möglich ist.

Gegenstand der Erfindung sind somit Lagenaufbauten, umfassend
i) eine Substratschicht aus einer thermoplastischen Polycarbonat-basierten Zusammensetzung, enthaltend
   a) 44 bis 63 Gew.-% aromatisches Polycarbonat,
   b) 3 bis 8 Gew.-% expandierten Graphit,
   c) 34 bis 38 Gew.-% gebranntes Siliciumdioxid,
   d) 0 bis 10 Gew.-% ein oder mehrere weitere Additive,
   wobei die Gesamtmenge an expandiertem Graphit und gebranntem Siliciumdioxid mindestens 40 Gew.-% beträgt.
   und
ii) eine auf die Substratschicht i aufgebrachte Metallschicht.

Die Gesamtmenge an expandiertem Graphit und gebrannten Siliciumdioxid gemäß den Komponenten b und c, d.h. die Summe aus deren Einzelmengen, beträgt bevorzugt mindestens 42 Gew.-%, weiter bevorzugt mindestens 42,5 Gew.-%, besonders bevorzugt mindestens 44 Gew.-%, ganz besonders bevorzugt mindestens 45 Gew.-%.

"Substratschicht aus einer thermoplastischen ... Zusammensetzung" bedeutet, dass die Substratschicht aus der Zusammensetzung besteht oder einen Teilbereich, bestehend aus der Zusammensetzung, aufweist. Vorzugsweise besteht die Substratschicht aus der Zusammensetzung.

"Lagenaufbau" im erfindungsgemäßen Sinne bedeutet eine Abfolge von mindestens den Schichten i und ii, also zwei Schichten, und könnte auch mit dem Begriff "Multilagenaufbau" bezeichnet werden. Grundsätzlich sind auch weitere Schichten möglich, wobei erfindungsgemäß bevorzugte Lagenaufbauten lediglich die Schichten i und ii umfassen.

Bevorzugte erfindungsgemäße Lagenaufbauten sind solche, bei denen die thermoplastische Polycarbonat-basierte Zusammensetzung der Substratschicht i
a) 54 bis 60 Gew.-% aromatisches Polycarbonat,
b) 5 bis 7,5 Gew.-% expandierten Graphit,
c) 35 bis 37,5 Gew.-% gebranntes Siliciumdioxid,
d) 0 bis 5 Gew.-% ein oder mehrere weitere Additive enthält.

Besonders bevorzugte erfindungsgemäße Lagenaufbauten umfassen
i) eine Substratschicht aus einer thermoplastischen Polycarbonat-basierten Zusammensetzung und
ii) eine auf die Substratschicht i aufgebrachte Metallschicht, wobei
   die thermoplastische Polycarbonat-basierte Zusammensetzung der Substratschicht i aus folgenden Komponenten besteht:
      a) 54 bis 60 Gew.-% aromatischem Polycarbonat,
      b) 5 bis 7,5 Gew.-% expandiertem Graphit, ganz besonders bevorzugt mit einem D(0,5) des expandierten Graphits von 700 µm bis 1200 µm, bestimmt durch Siebanalyse gemäß DIN 51938:2015-09,
      c) 35 bis 37,5 Gew.-% gebranntem Siliciumdioxid, ganz besonders bevorzugt mit einem D(0,5) des gebrannten Siliciumdioxids von 3 µm bis 5 µm, bestimmt nach ISO 13320:2009-10,
      d) 0 bis 5 Gew.-% einem oder mehreren weiteren Additiven,
   wobei die Gesamtmenge an expandiertem Graphit und gebranntem Siliciumdioxid mindestens 40 Gew.-%, insbesondere mindestens 42 Gew.-%, beträgt, wobei ganz besonders bevorzugt als Additive mindestens ein Thermostabilisator, mindestens ein Entformungsmittel und Ruß enthalten sind, wobei äußerst bevorzugt keine weiteren Additive enthalten sind.

Erfindungsgemäße Lagenaufbauten können Bauteilelement für verschiedenste Anwendungen sein.

Ein solcher Lagenaufbau ist bevorzugt Teil eines Reflektors oder bildet den Reflektor. Dieser ist zusammen mit einer Lichtquelle und ggf. einer Einfassung sowie ggf. einem Gehäuse, etwa einem Scheinwerfergehäuse, Teil einer Beleuchtungsvorrichtung, wobei der Reflektor so angeordnet ist, dass wenigstens ein Teil des von der Lichtquelle ausgesandten Lichts von dem Reflektor reflektiert wird. Ein Beispiel für solch eine Beleuchtungsvorrichtung ist ein Scheinwerfer, wie er in Kraftfahrzeugen insbesondere als Frontlichtscheinwerfer Verwendung findet. Erfindungsgemäß ebenfalls bevorzugt ist das Bauteil ein Spiegelelement eines Head-up-Displays. Ein solches Spiegelelement hat in einem Head-up-Display den Zweck, das gewünschte Bild auf die Windschutzscheibe zu projizieren.

Es versteht sich, dass eine oder mehrere weitere Schichten neben der Substratschicht und der Metallschicht Teil des Lagenaufbaus sein können. Solche Schichten sind insbesondere Schutzschichten. Bevorzugt umfasst ein erfindungsgemäßer Lagenaufbau neben der Substratschicht, der Metallschicht und einer oder mehreren Schutzschichten keine weiteren Schichten.

Bevorzugte Ausführungsformen der Lagenaufbauten, insbesondere auch hinsichtlich der thermoplastischen Polycarbonat-basierten Zusammensetzung, sind nachfolgend beschrieben. Es versteht sich, dass bevorzugte Ausführungsformen miteinander kombiniert werden können, sofern nichts Gegenteiliges beschrieben ist.

Gegenstand der Erfindung ist ebenso ein Verfahren zur Herstellung der Lagenaufbauten. Dieses Verfahren umfasst die Schritte, dass
a) aus der an anderen Stellen dieser Anmeldung beschriebenen thermoplastischen Polycarbonat-basierten Zusammensetzung mittels Einkomponentenspritzguss mit dynamischer Werkzeugtemperierung die Substratschicht geformt wird und anschließend
b) auf diese Substratschicht eine Metallschicht aufgebracht wird.

Die Metallschicht wirkt als Reflexionsschicht, welche Licht im Wellenlängenbereich von 380 nm bis 750 nm wenigstens teilweise reflektiert. Im einfachsten Fall ist die Metallschicht vollreflexiv analog einer Spiegelschicht ausgeführt.

Es kann sich zum Beispiel um eine Aluminiumschicht oder um eine Edelmetallschicht handeln. Die Schicht kann durch chemische Verfahren, insbesondere chemische Gasphasenabscheidung (CVD) oder Galvanisieren oder durch physikalische Verfahren, insbesondere physikalische Gasphasenabscheidung (PVD) oder Sputtern, aufgetragen werden. Die Verfahren sind näher beschrieben z.B. in "Vakuumbeschichtung Bd. 1 bis 5", H. Frey, VDI-Verlag, Düsseldorf, 1995 oder in "Oberflächen- und Dünnschicht-Technologie" Teil 1, R.A. Haefer, Springer, Verlag 1987.

Die Reflexionsschicht, also die Metallschicht, des erfindungsgemäßen Lagenaufbaus weist bevorzugt eine Dicke von ≥ 10 nm bis ≤ 1000 nm, weiter bevorzugt ≥ 50 nm bis ≤ 800 nm, besonders bevorzugt > 60 nm bis < 500 nm, ganz besonders bevorzugt > 60 nm bis < 300 nm, bestimmt mittels Rasterkraftmikroskopie, auf. Dieses ist die Gesamtdicke der Metallschicht. Sind z.B. zwei Schichten unterschiedlichen Metalls aufeinander gebracht, ist die Dicke der Metallschicht des Lagenaufbaus die Summe aus den Dicken dieser beiden Schichten.

Um eine bessere Metallhaftung zu erreichen und um die Substratoberfläche zu reinigen, kann die zu beschichtende Oberfläche einer Plasmavorbehandlung unterzogen werden. Eine Plasmavorbehandlung kann u. U. die Oberflächeneigenschaften von Polymeren verändern. Diese Methoden sind z.B. bei Friedrich et al. in "Metallized plastics 5 & 6: Fundamental and applied aspects" und in H. Grünwald et al. "Surface and Coatings Technology, 111 (1999), 287-296" beschrieben. Zur Herstellung des erfindungsgemäßen Lagenaufbaus ist eine Plasmavorbehandlung aber nicht erforderlich.

Die Metallschicht enthält bevorzugt mindestens ein Element, ausgewählt aus Ag, Al, Au, Pt, Fe, Cr, Sn, In, Ti, Pd, Nb, Cu, V, Edelstahl oder deren Legierungen. Bevorzugt ist die Schicht eine Aluminium-, Silber-, Gold-, Palladium- oder Kupferschicht, besonders bevorzugt eine Silber- oder Aluminiumschicht.

Die Metallschicht bedeckt die Substratschicht ganz oder teilweise. Sofern die Metallschicht die Substratschicht nur teilweise bedeckt, sind mindestens 60 %, bevorzugt mindestens 70 %, weiter bevorzugt mindestens 80 %, besonders bevorzugt mindestens 90 % der Substratschicht durch die Metallschicht bedeckt.

Die Metallschicht kann zum Schutz vor Oxidation oder Schutz vor sonstiger Beschädigung mit einer oder mehreren weiteren Schichten etc. versehen werden, welche die Schutzschicht/en bilden. Dazu ist die Metallschicht ggf. bevorzugt einseitig oder beidseitig von einer bzw. von mehreren Metalloxid- oder Metallnitrid-Schichten eingefasst, welche das homogene Abscheiden von Metall ermöglichen und/oder das Metall als Schutzschicht - hier auch Opferschicht genannt - schützen. Geeignete Oxide und/oder Nitride sind insbesondere Aluminiumoxid, Titandioxid, Siliciumoxid SiOₓ, Tantalpentoxid TazOs, Zirkonoxid, Zirkondioxid, Niobiumoxid, Hafniumoxid, Zink-Zinnoxid, Indium-Zinnoxid, Aluminium-Zinkoxid, Siliziumnitrid, Bornitrid oder Titannitrid. Diese Schichten zählen jedoch nicht zu der Metallschicht.

Alternativ oder zusätzlich kommen auch andere Schutzschichten als Metalloxid- oder Metallnitridschicht in Frage, die die Metallschicht bzw. Metall-artigen Schichten vor äußeren Einflüssen schützen, d.h. vor Korrosion schützen oder auch vor anderen äußeren Einflüssen wie Reinigungsmitteln, Kratzern etc. Derartige Schutzschichten können in einem PECVD-Prozess (plasma enhanced chemical vapour deposition) oder Plasmapolymerisationsprozess aufgebracht werden. Hierbei werden niedrigsiedende Precursor, insbesondere solche auf Siloxan-Basis, in ein Plasma verdampft und dadurch aktiviert, so dass sie einen Film bilden können. Typische Substanzen hierbei sind Hexamethyldisiloxan (HMDSO), Tetramethyldisiloxan, Decamethylcyclopentasiloxan, Octamethylcyclotetrasiloxan und Trimethoximethylsilan, wobei Hexamethyldisiloxan besonders bevorzugt ist. Ganz besonders bevorzugt ist die Schutzschicht eine Schicht, enthaltend Hexamethyldisiloxan (HMDSO). Die Dicke der Schutzschicht insgesamt beträgt dabei vorzugsweise maximal 100 nm, weiter bevorzugt weniger als 100 nm und besonders bevorzugt weniger als 50 nm, ganz besonders bevorzugt weniger als 35 nm.

Bevorzugt folgt auf die Schutzschicht/en bzw. auf die Metallschicht, wenn keine Schutzschicht vorhanden ist, was bei Metallschichten aus Gold und/oder Platin eine bevorzugte Ausführungsform ist, keine weitere Schicht. Die beschriebenen Schutzschichten sind auch generell bei dem erfindungsgemäßen Lagenaufbau nicht zwingend erforderlich, so dass in einer Ausführungsform keine Schutzschicht auf die Metallschicht aufgebracht ist. Bevorzugt ist der erfindungsgemäße Lagenaufbau ein Aufbau aus lediglich den Lagen i und ii. Für den Einsatz in Anwendungen wie Reflektoren ist bei der vorgesehenen Zusammensetzung kein Wärmesenkenelement erforderlich, sondern mehrere Funktionen werden alleine durch den erfindungsgemäßen Mehrlagenaufbau erfüllt.

Am oben genannten Schichtaufbau können diverse Modifizierungen vorgenommen werden. Beispielsweise können zwei Schichten Silber verwendet werden oder es können andere Schichtdicken verwendet werden.

Der Lagenaufbau kann planar sein und somit als einfacher Spiegel dienen. Gemäß einer weiteren Ausführungsform ist jedoch der Lagenaufbau nicht planar ausgebildet. Dann kann der Lagenaufbau als Bündelungs- oder Zerstreuungsspiegel wirken. Der Lagenaufbau kann zum Beispiel als Rotationsparaboloid ausgebildet sein.

Erfindungsgemäße Anwendungen des Lagenaufbaus sind Scheinwerfer-Reflektoren, aber auch z.B. Spiegeloptiken in Head Up-Displays. Scheinwerfer-Reflektoren oder Spiegeloptiken in Head Up-Displays, umfassend einen erfindungsgemäßen Lagenaufbau, sind somit ebenfalls Gegenstand der vorliegenden Erfindung.

### Thermoplastische Substratschicht

Nachfolgend sind die Komponenten der thermoplastischen Zusammensetzung der Substratschicht beschrieben. Es versteht sich, dass sich die Gew.-%-Angaben jeweils auf das Gesamtgewicht der jeweils beschriebenen Zusammensetzung beziehen.

Weiterhin versteht es sich, dass die eingesetzten Komponenten übliche Verunreinigungen, die beispielsweise aus ihrem Herstellungsprozess herrühren, enthalten können. Es ist bevorzugt, möglichst reine Komponenten einzusetzen. Es versteht sich weiterhin, dass diese Verunreinigungen auch bei einer geschlossenen Formulierung der Zusammensetzung enthalten sein können. Sie tragen dann zum jeweiligen Gewichtsanteil der Komponente, von der sie herrühren, bei und sind in diesen einzurechnen.

### Komponente a

Komponente a der Zusammensetzungen sind aromatische Polycarbonate.

Aromatische Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Die thermoplastischen Polycarbonate haben bevorzugt gewichtsmittlere Molekulargewichte M_{w} von 15.000 g/mol bis 40.000 g/mol, weiter bevorzugt bis 34.000 g/mol, besonders bevorzugt von 17.000 g/mol bis 33.000 g/mol, insbesondere von 19.000 g/mol bis 32.000 g/mol, ermittelt durch Gelpermeationschromotographie, kalibriert gegen Bisphenol A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm, Konzentration der Lösungen: 0,2 Gew.-%. Flussrate: 1,0 ml/min, Temperatur der Lösungen: 30°C. Verwendung einer UV- und/oder RI-Detektion.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Dihydroxyarylverbindungen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (1)

HO-Z-OH (1),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2) 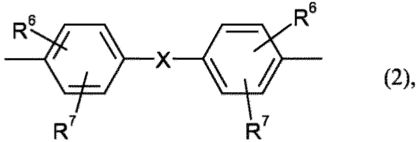 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁₋ bis C₅-Alkylen, C₂- bis C₅-Alkyliden, C₅- bis C₆-Cycloalkyliden, -O-, -SO-, -CO-, -S-, -SO₂-
oder für einen Rest der Formel (3)

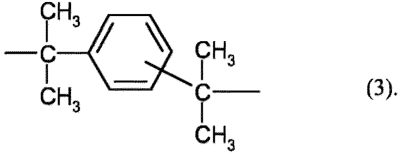

Beispiele für Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate und Copolycarbonate geeignete Dihydroxyarylverbindungen sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren alkylierte, kernalkylierte und kernhalogenierte Verbindungen. Zur Herstellung von Copolycarbonaten können auch Si-haltige Telechele eingesetzt werden, sodass sogenannte Si-Copolycarbonate erhalten werden.

Bevorzugte Dihydroxyarylverbindungen sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propn, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-triamethylcyclohexan (Bisphenol TMC) sowie die Bisphenole der Formeln (I) bis (III) 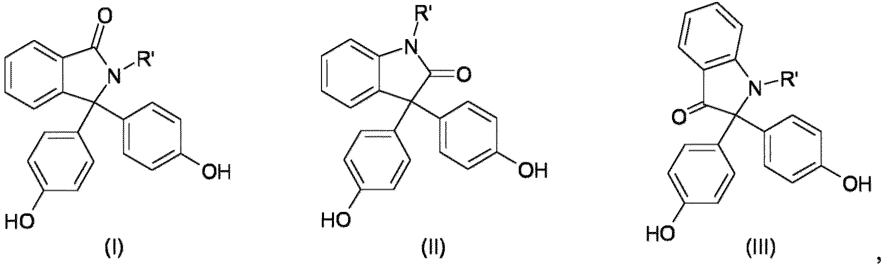 in denen R' jeweils für einen C₁- bis C₄-Alkylrest, Aralkylrest oder Arylrest, bevorzugt für einen Methylrest oder Phenylrest, ganz besonders bevorzugt für einen Methylrest, steht.

Besonders bevorzugte Dihydroxyarylverbindungen sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC) sowie die Dihydroxyarylverbindungen der Formeln (I), (II) und/oder (III).

Diese und weitere geeignete Dihydroxyarylverbindungen sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur eine Dihydroxyarylverbindung eingesetzt, im Falle von Copolycarbonaten werden zwei oder mehr Dihydroxyarylverbindungen eingesetzt.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan beziehungsweise der beiden Monomere Bisphenol A und 4,4'-Dihydroxydiphenyl, sowie von den Dihydroxyarylverbindungen der Formeln (I), (II) und/oder (III) 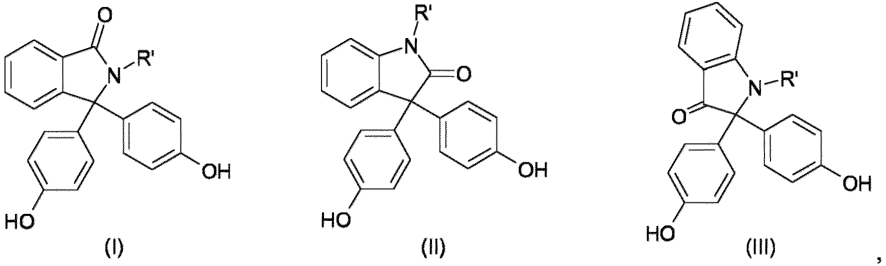 in denen R' jeweils für C₁- bis C₄-Alkyl, Aralkyl oder Aryl, bevorzugt für Methyl oder Phenyl, ganz besonders bevorzugt für Methyl, steht,
abgeleitete Homo- oder Copolycarbonate, insbesondere mit Bisphenol A.

Der Gesamtanteil der Monomereinheiten beruhend auf den Formeln (I), (II), (III), 4,4'-Dihydroxydiphenyl und/oder Bisphenol TMC im Copolycarbonat beträgt vorzugsweise 0,1 - 88 mol-%, besonders bevorzugt 1 - 86 mol-%, ganz besonders bevorzugt 5 - 84 mol-% und insbesondere 10 - 82 mol-% (bezogen auf die Summe der Mole eingesetzter Dihydroxyarylverbindungen).

Die verwendeten Dihydroxyarylverbindungen, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die Copolycarbonate können als block- und statistisches Copolycarbonat vorliegen. Besonders bevorzugt sind statistische Copolycarbonate.

Dabei ergibt sich das Verhältnis der Häufigkeit der Diphenolat-Monomereinheiten im Copolycarbonat aus dem Molverhältnis der eingesetzten Dihydroxyarylverbindungen.

Die relative Lösungsviskosität der Copolycarbonate, bestimmt nach ISO 1628-4:1999, liegt bevorzugt im Bereich von = 1,15 - 1,35.

Die zur Regelung des Molekulargewichtes benötigten monofunktionellen Kettenabbrecher, wie Phenole oder Alkylphenole, insbesondere Phenol, p-tert.-Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen.

Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel zudosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrigen alkalischen Phase vorgelegt werden oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, US 5,340,905 A, US 5,097,002 A, US-A 5,717,057 A).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

Bevorzugt sind auch Copolycarbonate, zu deren Herstellung Diphenole der allgemeinen Formel (1a) eingesetzt wurden: 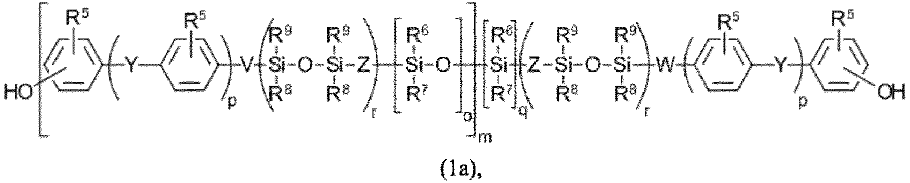 wobei
R⁵ für Wasserstoff oder C₁- bis C₄- Alkyl, C₁- bis C₃-Alkoxy, vorzugsweise für Wasserstoff; Methoxy oder Methyl, steht,
R⁶, R⁷, R⁸ und R⁹ jeweils unabhängig voneinander für C₁- bis C₄-Alkyl oder C₆- bis C₁₂-Aryl, vorzugsweise für Methyl oder Phenyl stehen,
Y für eine Einfachbindung, SOz-, -S-, -CO-, -O-, C₁- bis C₆-Alkylen, C₂- bis C₅-Alkyliden, C₆- bis C₁₂-Arylen, welches gegebenenfalls mit weiteren Heteroatome enthaltenden aromatischen Ringen kondensiert sein kann oder für einen C₅- bis C₆-Cycloalkylidenrest, der ein- oder mehrfach mit C₁-bis C₄-Alkyl substituiert sein kann, bevorzugt für eine Einfachbindung, -O-, Isopropyliden oder für einen C₅- bis C₆-Cycloalkylidenrest, der ein- oder mehrfach mit C₁- bis C₄-Alkyl substituiert sein kann, steht,
V für Sauerstoff, C₂- bis C₆-Alkylen oder C₃- bis C₆-Alkyliden, bevorzugt für Sauerstoff oder C₃-Alkylen,
p, q und r jeweils unabhängig für 0 oder 1 stehen,
wenn q = 0 ist, W für eine Einfachbindung steht, wenn q = 1 und r = 0 ist, W für Sauerstoff, C₂- bis C₆-Alkylen oder C₃- bis C₆-Alkyliden, bevorzugt für Sauerstoff oder C₃-Alkylen steht,
wenn q = 1 und r = 1 ist, W und V jeweils unabhängig für C₂- bis C₆-Alkylen oder C₃- bis C₆-Alkyliden, bevorzugt C₃-Alkylen steht,
Z für ein C₁- bis C₆-Alkylen, bevorzugt C₂-Alkylen steht,
o für eine durchschnittliche Anzahl von Wiederholungseinheiten von 10 bis 500, bevorzugt 10 bis 100 steht, und
m für eine durchschnittliche Anzahl von Wiederholungseinheiten von 1 bis 10, bevorzugt 1 bis 6, weiter bevorzugt 1,5 bis 5 steht. Ebenso ist es möglich, dass Diphenole verwendet werden, in denen zwei oder mehrere Siloxanblöcke der allgemeinen Formel (1a) über Terephthalsäure und/oder Isophthalsäure miteinander unter Ausbildung von Estergruppen verknüpft sind.

Insbesondere bevorzugt sind (Poly)Siloxane der Formeln (2) und (3) 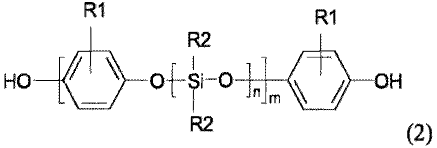 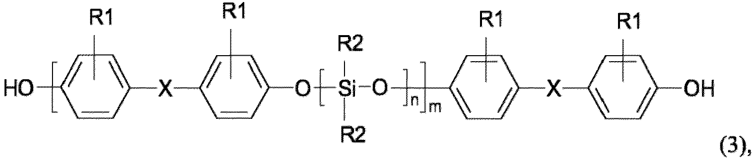
wobei R1 für Wasserstoff, C₁- bis C₄-Alkyl, vorzugsweise für Wasserstoff oder Methyl steht und insbesondere bevorzugt für Wasserstoff,
R2 unabhängig voneinander für Aryl oder Alkyl, bevorzugt für Methyl,
X für eine Einfachbindung, -SOz-, -CO-, -O-, -S-, C₁- bis C₆-Alkylen, C₂- bis C₅-Alkyliden oder für C₆- bis C₁₂-Arylen, welches gegebenenfalls mit weiteren Heteroatome enthaltenden aromatischen Ringen kondensiert sein kann, steht,
X bevorzugt für eine Einfachbindung, C₁- bis C₅-Alkylen, C₂- bis C₅-Alkyliden, C₅- bis C₁₂-Cycloalkyliden, -O-, -SO- -CO-, -S-, -SOz-, besonders bevorzugt steht X für eine Einfachbindung, Isopropyliden, C₅- bis C₁₂-Cycloalkyliden oder Sauerstoff, und ganz besonders bevorzugt für Isopropyliden steht,
n eine durchschnittliche Zahl von 10 bis 400, bevorzugt 10 und 100, insbesondere bevorzugt 15 bis 50 bedeutet und
m für eine durchschnittliche Zahl von 1 bis 10, bevorzugt von 1 bis 6 und insbesondere bevorzugt von 1,5 bis 5 steht.

Ebenso bevorzugt kann der Siloxanblock von folgender Struktur abgeleitet sein 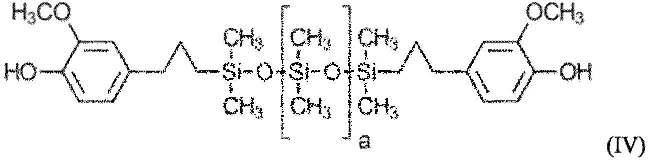 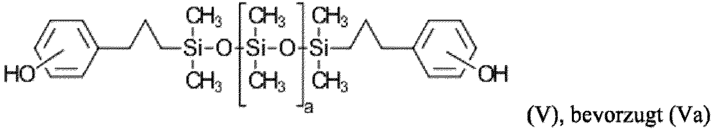 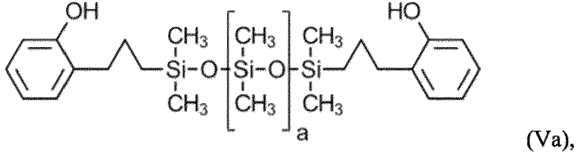 oder 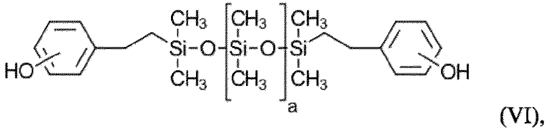 wobei a in Formel (IV), (V) und (VI) für eine durchschnittliche Zahl von 10 bis 400, bevorzugt 10 bis 100 und besonders bevorzugt für 15 bis 50 steht.

Dabei ist es ebenso bevorzugt, dass mindestens zwei gleiche oder verschiedene der Siloxanblöcke der allgemeinen Formeln (IV), (V) oder (VI) über Terephthalsäure und/oder Isophthalsäure miteinander unter Ausbildung von Estergruppen verknüpft sind.

Ebenso ist es bevorzugt, wenn in der Formel (1a) p = 0 ist, V für C₃-Alkylen steht, r = 1 ist, Z für C₂-Alkylen steht, R⁸ und R⁹ für Methyl stehen, q = 1 ist, W für C₃-Alkylen steht, m = 1 ist, R⁵ für Wasserstoff oder C₁- bis C₄-Alkyl, vorzugsweise für Wasserstoff oder Methyl, steht, R⁶ und R⁷ jeweils unabhängig voneinander für C₁- bis C₄-Alkyl, vorzugsweise für Methyl stehen und o für 10 bis 500 steht.

Copolycarbonate mit Monomereinheiten der Formel (1a) und insbesondere auch deren Herstellung sind in der WO 2015/052106 A2 beschrieben.

Copolycarbonate mit Monomereinheiten der Formel (IV) und insbesondere auch deren Herstellung sind in der WO 2015/052106 A2 beschrieben.

Zusammensetzungen i.S. der Erfindung sind "Polycarbonat-basierte Zusammensetzungen". Dieses sind solche Zusammensetzungen, deren Basismaterial, d.h. überwiegend vorhandene Komponente, ein Polycarbonat ist. "Überwiegend" bedeutet hierbei mindestens 44 Gew.-%, bevorzugt mindestens 50 Gew.-%, weiter bevorzugt mindestens 54 Gew.-%, besonders bevorzugt bis 60 Gew.-%, aromatisches Polycarbonat, bezogen auf die Gesamtzusammensetzung.

### Komponente b

Als Komponente b der thermoplastischen Zusammensetzungen der Substratschicht des Multilagenaufbaus wird expandierter Graphit eingesetzt. Bei dem eingesetzten Graphit kann es sich um einen Typ eines expandierten Graphits handeln, aber auch um eine Mischung zweier oder mehr Typen.

Bei den expandierten Graphiten sind die einzelnen Basalebenen des Graphits durch eine spezielle Behandlung auseinandergetrieben, wodurch eine Volumenvergrößerung des Graphits, bevorzugt um den Faktor 200 bis 400, resultiert. Die Herstellung von expandierten Graphiten ist unter anderem in den Schriften US 1,137,373 A, US 1,191,383 A sowie US 3,404,061 A beschrieben.

Graphite werden in Form von Fasern, Stäbchen, Kugeln, Hohlkugeln, Plättchen, in Pulverform, jeweils sowohl in aggregierter als auch in agglomerierter Form, bevorzugt in Plättchenform, in den Zusammensetzungen verwendet.

Unter der plättchenförmigen Struktur wird in der vorliegenden Erfindung ein Partikel verstanden, das eine flache Geometrie aufweist. So ist die Höhe der Partikel üblicherweise deutlich geringer im Vergleich zu der Breite oder Länge der Partikel. Derartige flache Partikel können wiederum zu Gebilden agglomeriert oder aggregiert sein.

Die Höhe der plättchenförmigen Primärpartikel, bestimmt mittels Rasterkraftmikroskopie AFM, beträgt weniger als 500 nm, bevorzugt weniger als 200 nm und besonders bevorzugt weniger als 100 nm. Durch die kleinen Größen dieser Primärpartikel kann die Form der Partikel gebogen, gekrümmt, gewellt oder andersartig deformiert sein.

Die Längendimensionen der Partikel können durch Standardmethoden, zum Beispiel die Elektronenmikroskopie, ermittelt werden.

Graphit wird in den erfindungsmäßen thermoplastischen Zusammensetzungen in Mengen von 3,0 bis 8,0 Gew.-%, bevorzugt 5,0 bis 7,5 Gew.-%, eingesetzt, um eine gute thermische Leitfähigkeit der thermoplastischen Zusammensetzungen zu erhalten.

Erfindungsgemäß bevorzugt wird ein Graphit mit einer relativ hohen spezifischen Oberfläche, ermittelt als BET-Oberfläche mittels Stickstoffadsorption nach ASTM D3037:1993, verwendet. Bevorzugt werden Graphite mit einer BET-Oberfläche von ≥ 5 m²/g, besonders bevorzugt ≥ 10 m²/g und ganz besonders bevorzugt ≥ 18 m²/g in den thermoplastischen Zusammensetzungen eingesetzt.

Bevorzugt haben die Graphite eine Partikelgrößenverteilung, bestimmt durch Siebanalyse gemäß DIN 51938:2015-09, welche durch den D(0,5) charakterisiert wird, von mindestens 400 µm, weiter bevorzugt von mindestens 600 µm, noch weiter bevorzugt von mindestens 650 µm bis 1300 µm und besonders bevorzugt von mindestens 700 µm bis 1200 µm, ganz besonders bevorzugt von 720 µm bis < 1200 mm. Bei einer Ausführungsform ist eine Partikelgrößenverteilung mit einem D(0,5) des expandierten Graphits < 1000 µm bevorzugt.

Bevorzugt gelten für den eingesetzten Graphit mindestens die Bereiche für D(0,5). Weiter bevorzugt gelten daneben auch die folgenden bevorzugten Bereiche für D(0,1), und D(0,9), entweder alternativ oder besonders bevorzugt additiv zusammen:
Die Graphite haben bevorzugt eine Partikelgrößenverteilung, bestimmt durch Siebanalyse gemäß DIN 51938:2015-09, welche durch einen D(0,9) charakterisiert wird, von mindestens 1 mm, bevorzugt von mindestens 1,2 mm, weiter bevorzugt von mindestens 1,4 mm und noch weiter bevorzugt von mindestens 1,5 mm.

Auch haben die Graphite bevorzugt eine Partikelgrößenverteilung, bestimmt durch Siebanalyse gemäß DIN 51938:2015-09, welche durch einen D(0,1) charakterisiert wird, von mindestens 100 µm, bevorzugt von mindestens 150 µm, weiter bevorzugt von mindestens 200 µm und noch weiter bevorzugt von mindestens 250 µm,

Die verwendeten Graphite haben bevorzugt eine Dichte, ermittelt mit Xylol, im Bereich von 2,0 g/cm³ bis 2,4 g/cm³, bevorzugt von 2,1 g/cm³ bis 2,3 g/cm³ sowie weiter bevorzugt von 2,2 g/cm³ bis 2,27 g/cm³.

Der Kohlenstoffgehalt der eingesetzten Graphite der erfindungsgemäßen Lagenaufbauten, ermittelt nach DIN 51903:2012-11 bei 800 °C für 20 Stunden, beträgt vorzugsweise ≥ 90 %, weiter bevorzugt ≥ 95 % und noch weiter bevorzugt ≥ 98%.

Der Restfeuchtigkeitsgehalt der eingesetzten Graphite der erfindungsgemäßen Lagenaufbauten, ermittelt nach DIN 51904:2012-11 bei 110 °C für 8 Stunden, beträgt vorzugsweise ≤ 5 %, weiter bevorzugt ≤ 3 % und noch weiter bevorzugt ≤ 2 %.

Die thermische Leitfähigkeit der eingesetzten Graphite der erfindungsgemäßen Lagenaufbauten beträgt vor der Verarbeitung parallel zu den Basalebenen zwischen 250 und 400 W/(m*K) sowie senkrecht zu den Basalebenen zwischen 6 bis 8 W(m*K).

Der elektrische Widerstand der eingesetzten Graphite der erfindungsgemäßen Lagenaufbauten beträgt vor der Verarbeitung parallel zu den Basalebenen ca. 0,001 Ω*cm und ist senkrecht zu den Basalebenen kleiner 0,1 Ω*cm.

Die Schüttdichte der Graphite, ermittelt nach DIN 51705:2001-06, beträgt üblicherweise zwischen 50 g/l und 250 g/l, bevorzugt zwischen 65 g/l und 220 g/l und weiter bevorzugt zwischen 100 g/l und 200 g/l.

Bevorzugt werden Graphite in den thermoplastischen Zusammensetzungen der erfindungsgemäßen Lagenaufbauten eingesetzt, welche einen Schwefelgehalt kleiner 200 ppm aufweisen.

Bevorzugt werden Graphite in den thermoplastischen Zusammensetzungen der erfindungsgemäßen Lagenaufbauten eingesetzt, welche einen auslaugfähigen Chlorionengehalt kleiner 100 ppm aufweisen.

Ebenfalls bevorzugt werden Graphite in den thermoplastischen Zusammensetzungen der erfindungsgemäßen Lagenaufbauten eingesetzt, welche einen Gehalt an Nitraten und Nitriten kleiner 50 ppm aufweisen.

Besonders bevorzugt werden Graphite eingesetzt, welche alle diese Grenzwerte, d.h. für den Schwefel-, den Chlorionen-, den Nitrat- und den Nitritgehalt aufweisen.

Kommerziell verfügbare Graphite sind unter anderem Ecophit GFG 5, Ecophit GFG 50, Ecophit GFG 200, Ecophit GFG 350, Ecophit GFG 500, Ecophit GFG 900, Ecophit GFG 1200 von der Firma SGL Carbon GmbH, TIMREX BNB90, TIMREX KS5-44, TIMREX KS6, TIMREX KS150, TIMREX SFG44, TIMREX SFG150, TIMREX C-THERM^{™} 001 und TIMREX C-THERM^{™} 011 von der Firma TIMCAL Ltd., SC 20 O, SC 4000 O/SM und SC 8000 O/SM von der Graphit Kropfmühl AG, Mechano-Cond 1, Mechano-Lube 2 und Mechano-Lube 4G von der Firma H.C. Carbon GmbH, Nord-Min 251 und Nord-Min 560T von der Firma Nordmann Rassmann GmbH und ASBURY A99, Asbury 230U und Asbury 3806 von der Firma Asbury Carbons.

### Komponente c

Erfindungsgemäß für den Lagenaufbau einsetzbare Zusammensetzungen enthalten als Komponente c gebranntes Siliciumdioxid. Bei gebranntem Siliciumdioxid, auch "fused silica" genannt, handelt es sich um Quarzglas, aufgeschmolzenes und wieder erstarrtes Siliciumdioxid. Es kann sich um gebranntes Siliciumdioxid aus natürlich vorkommendem oder synthetisch hergestelltem Quarz oder aus einer Mischung aus beidem handeln.

Bevorzugt handelt es sich bei Komponente c um Quarzgut, das durch eisenfreie Mahlung mit nachfolgender Windsichtung aus aufbereitetem Quarzsand hergestellt wurde.

Komponente c ist in den Zusammensetzungen in einer Menge von 34 bis 38 Gew.-%, bevorzugt 35 bis 37,5 Gew.-%, enthalten.

Das in den Zusammensetzungen der Substratschicht verwendete Siliciumdioxid weist bevorzugt eine sphärische und/oder annähernd sphärische Korngestalt auf. Annähernd sphärisch bedeutet hierbei Folgendes: Sofern die Kugel durch von einem gemeinsamen Ursprung ausgehende, in den Raum gerichtete Achsen gleicher Länge beschrieben wird, wobei die Achsen den Radius der Kugel in alle Raumrichtungen definieren, ist für die sphärischen Partikel eine Abweichung der Achsenlängen vom Idealzustand der Kugel von bis zu 20% möglich, um noch als annähernd sphärisch zu gelten.

Das gebrannte Siliciumdioxid ist bevorzugt durch einen mittleren Durchmesser d(0,5), bestimmt nach ISO 13320:2009-10, von 2 bis 10 µm, weiter bevorzugt von 2,5 bis 8,0 µm, noch weiter bevorzugt von 3 bis 5 µm gekennzeichnet, wobei ein oberer Durchmesser d(0,9), bestimmt nach ISO 13320:2009, von entsprechend 6 bis 34 µm bevorzugt ist, weiter bevorzugt von 6,5 bis 25,0 µm, noch weiter bevorzugt von 7 bis 15 µm, und besonders bevorzugt von 10 µm,

Bevorzugt weist das gebrannte Siliciumdioxid eine spezifische BET-Oberfläche, bestimmt durch Stickstoffadsorption gemäß ISO 9277:2010-09, von 0,4 bis 8,0 m²/g, weiter bevorzugt von 2 bis 7 m²/g, und besonders bevorzugt von 4,4 bis 6 m²/g auf.

Noch weiter bevorzugtes gebranntes Siliciumdioxid weist nur maximal 3 Gew.-% Nebenbestandteile auf, wobei vorzugsweise der Gehalt an Al₂O₃ < 2,0 Gew.-%, Fe₂O₃ < 0,05 Gew.-%, (CaO + MgO) < 0,1 Gew.-%, (NazO + K₂O) < 0,1 Gew.-% ist, jeweils bezogen auf das Gesamtgewicht des gebrannten Siliciumdioxids.

Bevorzugt wird gebranntes Siliciumdioxid mit einem pH-Wert, gemessen gemäß ISO 10390:2005 in wässriger Suspension, im Bereich 6 bis 9, weiter bevorzugt 6,5 bis 8,0 eingesetzt.

Das Siliciumdioxid weist bevorzugt eine Ölabsorptionszahl gemäß DIN EN ISO 787-5:1995-10 von bevorzugt 20 bis 30 g/100 g auf.

Es kann gebranntes Siliciumdioxid zum Einsatz kommen, das eine Schlichte an der Oberfläche aufweist, wobei bevorzugt Epoxy-modifizierte, Polyurethan-modifizierte und nichtmodifizierte Silanverbindungen, Methylsiloxan-, und Methacrylsilan-Schlichten oder Mischungen der vorgenannten Silanverbindungen zum Einsatz kommen. Besonders bevorzugt ist eine Epoxysilanschlichte. Die Beschlichtung von Siliciumdioxid erfolgt nach den allgemeinen, dem Fachmann bekannten Verfahren.

Bevorzugt weist das für erfindungsgemäße Zusammensetzungen eingesetzte Siliciumdioxid jedoch keine Schlichte auf.

Es versteht sich, dass gebranntes Siliciumdioxid mit den als bevorzugt beschriebenen Eigenschaften alleine oder in Mischung mit einem oder mehreren anderen gebrannten Siliciumdioxiden die Komponente c bilden kann. Bevorzugt ist die Komponente c ein gebranntes Siliciumdioxid mit einer oder mehreren der als bevorzugt genannten Eigenschaften.

### Komponente d

Zusätzlich sind optional weitere Additive, bis zu 10 Gew.-%, bevorzugt bis 6 Gew.-%, weiter bevorzugt bis zu 5 Gew.-%, noch weiter bevorzugt 0,1 bis 0,7 Gew.-%, enthalten, wobei sich diese Gewichtsprozente, hier wie an anderer Stelle, auf das Gesamtgewicht der Zusammensetzung beziehen.

Die Gruppe der weiteren Additive umfasst keinen expandierten Graphit und kein gebranntes Siliciumdioxid, da diese bereits als Komponenten b und c beschrieben sind.

Solche Additive, wie sie üblicherweise bei Polycarbonat-haltigen Zusammensetzungen zugesetzt werden, sind beispielsweise Thermostabilisatoren, Antistatika, UV-Absorber, IR-Absorber, Flammschutzmittel, Antidrippingmittel, Schlagzähmodifikatoren, Antioxidantien, anorganische Pigmente, Ruß, Farbmittel und/oder anorganische Füllstoffe wie Titandioxid, Silikate, Aluminiumsilikate, Talk, Kreide, Quarzpulver, Wollastonit, Glimmer/Tonschichten, Montmorillonit, Aluminiumoxid, Magnesiumoxid, Siliciumdioxid (nicht gebrannt) und/oder Bariumsulfat und/oder Entformungsmittel, etwa in EP 0 839 623 A1, WO 96/15102 A2, EP 0 500 496 A1 oder im "Plastics Additives Handbook", Hans Zweifel, 5th Edition 2000, Hanser Verlag, München beschrieben, in den für Polycarbonat üblichen Mengen. Diese Additive können einzeln oder auch im Gemisch zugesetzt werden.

Als Thermostabilisatoren sind insbesondere Phosphor-basierte Stabilisatoren, ausgewählt aus der Gruppe der Phosphate, Phosphite, Phosphonite, Phosphine und deren Mischungen, geeignet. Es können auch Mischungen von verschiedenen Verbindungen aus einer dieser Untergruppen eingesetzt werden, z.B. zwei Phosphite.

Als Thermostabilisatoren werden bevorzugt Phosphor-Verbindungen mit der Oxidationszahl +III, insbesondere Phosphine und/oder Phosphite, eingesetzt.

Als Thermostabilisatoren eignen sich besonders bevorzugt Triphenylphosphin, Tris-(2,4-di-tert-butylphenyl)phosphit (Irgafos 168), Tetrakis-(2,4-di-tert-butylphenyl)-[1,1-biphenyl]-4,4'-diylbisphosphonit, Octadecyl-3-(3,5-di-tert-butyl-4-hydroxyphenyl)-propionat (Irganox 1076), Bis-(2,4-dicumylphenyl)-pentaerythritoldiphosphit (Doverphos S-9228), Bis-(2,6-di-tert-butyl-4-methylphenyl)-pentaerythritoldiphosphit (ADK STAB PEP-36).

Sie werden allein oder im Gemisch, z. B. Irganox B900 (Gemisch aus Irgafos 168 und Irganox 1076 im Verhältnis 4:1) oder Doverphos S-9228 mit Irganox B900 bzw. Irganox 1076, eingesetzt.

Die Thermostabilisatoren werden bevorzugt in Mengen bis zu 1,0 Gew.-%, weiter bevorzugt 0,003 Gew.-% bis 1,0 Gew.-%, noch weiter bevorzugt 0,005 Gew.-% bis 0,5 Gew.-%, besonders bevorzugt 0,01 Gew.-% bis 0,3 Gew.-%, eingesetzt.

Bevorzugte Entformungsmittel sind Ester aliphatischer langkettiger Carbonsäuren mit ein- oder mehrwertigen aliphatischen und/oder aromatischen Hydroxyverbindungen. Besonders bevorzugt sind Pentaerythrittetrastearat, Glycerinmonostearat, Stearylstearat und Propandioldistearat, bzw. Gemische daraus.

Bevorzugte UV-Absorber weisen eine möglichst geringe Transmission unterhalb 400 nm und eine möglichst hohe Transmission oberhalb von 400 nm auf. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin 234, Ciba Spezialitätenchemie, Basel), 2-(2'-Hydroxy-5'-(tert.-octyl)-phenyl)-benzotriazol (Tinuvin 329, Ciba Spezialitätenchemie, Basel), 2-(2'-Hydroxy-3'-(2-butyl)-5'-(tert.butyl)-phenyl)-benzotriazol (Tinuvin 350, Ciba Spezialitätenchemie, Basel), Bis-(3-(2H-benztriazolyl)-2-hydroxy-5-tert.-octyl)methan, (Tinuvin^{®} 360, Ciba Spezialitätenchemie, Basel), (2-(4,6-Diphenyl-1,3,5-triazin-2-yl)-5-(hexyloxy)-phenol (Tinuvin 1577, Ciba Spezialitätenchemie, Basel), sowie der Benzophenone 2,4-Dihydroxybenzophenon (Chimasorb 22, Ciba Spezialitätenchemie, Basel) und 2-Hydroxy-4-(octyloxy)-benzophenon (Chimassorb 81, Ciba, Basel), 2-Cyano-3,3-diphenyl-2-propensäure-2-ethylhexylester, 2,2-Bis[[(2-cyano-1-oxo-3,3-diphenyl-2-propenyl)oxy]-methyl]-1,3-propandiylester (9CI) (Uvinul 3030, BASF AG Ludwigshafen), 2-[2-Hydroxy-4-(2-ethylhexyl)oxy]phenyl-4,6-di(4-phenyl)phenyl-1,3,5-triazin (CGX UVA 006, Ciba Spezialitätenchemie, Basel) oder Tetraethyl-2,2'-(1,4-phenylen-dimethyliden)-bismalonat (Hostavin B-Cap, Clariant AG).

Besonders bevorzugte spezielle UV-Stabilisatoren sind beispielsweise Tinuvin 360, Tinuvin 350, Tinuvin 329, Hostavin B-CAP, besonders bevorzugt TIN 329 und Hostavin B-Cap. Es können auch Mischungen dieser Ultraviolett-Absorber eingesetzt werden. Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin 234, BASF SE, Ludwigshafen), 2-(2'-Hydroxy-5'-(tert.-octyl)-phenyl)-benzotriazol (Tinuvin 329, BASF SE, Ludwigshafen), Bis-(3-(2H-benztriazolyl)-2-hydroxy-5-tert.-octyl)methan (Tinuvin 360, BASF SE, Ludwigshafen), 2-(4,6-Diphenyl-1,3,5-triazin-2-yl)-5-(hexyloxy)-phenol (Tinuvin 1577, BASF SE, Ludwigshafen), 2-(5chloro-2H-benzotriazol-2-yl)-6-(1,1-dimethylethyl)-4-methyl-phenol (Tinuvin 326, BASF SE, Ludwigshafen), sowie Benzophenone wie 2,4-Dihydroxybenzophenon (Chimasorb 22 , BASF SE, Ludwigshafen) und 2-Hydroxy-4-(octyloxy)-benzophenon (Chimassorb 81, BASF SE, Ludwigshafen), 2,2-Bis[[(2-cyano-1-oxo-3,3-diphenyl-2-propenyl)oxy]-methyl]-1,3-propandiylester (9CI) (Uvinul 3030, BASF SE, Ludwigshafen), 2-[2-Hydroxy-4-(2-ethylhexyl)oxy]phenyl-4,6-di(4-phenyl)phenyl-1,3,5-triazine (Tinuvin 1600, BASF SE, Ludwigshafen), Tetraethyl-2,2'-(1,4-phenylen-dimethyliden)-bismalonat (Hostavin B-Cap, Clariant AG) oder N-(2-Ethoxyphenyl)-N'-(2-ethylphenyl)-ethandiamid (Tinuvin 312, CAS-Nr. 23949-66-8, BASF SE, Ludwigshafen).

Besonders bevorzugte spezielle UV-Stabilisatoren sind Tinuvin 360, Tinuvin 329, Tinuvin 326, Tinuvin 1600, Tinuvin 312, Uvinul 3030 und/oder Hostavin B-Cap; ganz besonders bevorzugt sind Tinuvin 329 und Tinuvin 360.

Sofern UV-Absorber enthalten sind, enthält die Zusammensetzung bevorzugt UV-Absorber in einer Menge bis 0,8 Gew.-%, bevorzugt 0,05 Gew.-% bis 0,5 Gew.-%, weiter bevorzugt 0,08 Gew.-% bis 0,4 Gew.-%, ganz besonders bevorzugt 0,1 Gew.-% bis 0,35 Gew.-%, bezogen auf die Gesamtzusammensetzung.

Geeignete IR-Absorber sind beispielsweise in EP 1 559 743 A1, EP 1 865 027 A1, DE 10022037 A1, DE 10006208 A1 sowie in den italienischen Patentanmeldungen RM2010A000225, RM2010A000227 sowie RM2010A000228 offenbart. Von den in der zitierten Literatur genannten IR-Absorbern sind solche auf Borid- und Wolframatbasis, insbesondere Cäsiumwolframat oder Zink-dotiertes Cäsiumwolframat, sowie auf ITO und ATO basierende Absorber sowie Kombinationen daraus bevorzugt.

Die erfindungsgemäßen Zusammensetzungen können auch Phosphate oder Sulfonsäureester als Umesterungsstabilisatoren enthalten. Bevorzugt ist Triisooctylphosphat als Umesterungsstabilisator enthalten. Triisooctylphosphat wird bevorzugt in Mengen von 0,003 Gew.-% bis 0,05 Gew.-%, weiter bevorzugt 0,005 Gew.-% bis 0,04 Gew.-% und besonders bevorzugt von 0,01 Gew.-% bis 0,03 Gew.-%, bezogen auf die Gesamtzusammensetzung, eingesetzt.

Geeignete Farbmittel können Pigmente, organische und anorganische Pigmente, Ruß und/oder Farbstoffe sein. Farbmittel oder Pigmente im Sinne der vorliegenden Erfindung sind Schwefelhaltige Pigmente wie Cadmiumrot oder Cadmiumgelb, Eisencyanid-basierte Pigmente wie Berliner Blau, Oxid-Pigmente wie Zinkoxid, rotes Eisenoxid, schwarzes Eisenoxid, Chromoxid, Titangelb, Zink-Eisen-basiertes Braun, Titan-Cobalt-basiertes Grün, Cobaltblau, Kupfer-Chrom-basiertes Schwarz und Kupfer-Eisen-basiertes Schwarz oder Chrom-basierte Pigmente wie Chromgelb, Phthalocyanin-abgeleitete Farbstoffe wie Kupfer-Phthalocyanin-Blau oder Kupfer-Phthalocyanin-Grün, kondensierte polycyclische Farbstoffe und Pigmente wie Azo-basierende (z. B. Nickel-Azogelb), Schwefel-Indigo-Farbstoffe, Perinon-basierte, Perylen-basierte, Chinacridon-abgeleitete, Dioxazin-basierte, Isoindolinon-basierte und Chinophthalon-abgeleitete Derivate, Anthrachinonbasierte, heterocyclische Systeme.

Konkrete Beispiele für Handelsprodukte sind z. B. MACROLEX Blau RR, MACROLEX Violett 3R, MACROLEX Violett B (Lanxess AG, Deutschland), Sumiplast Violett RR, Sumiplast Violett B, Sumiplast Blau OR, (Sumitomo Chemical Co., Ltd.), Diaresin Violett D, Diaresin Blau G, Diaresin Blau N (Mitsubishi Chemical Corporation), Heliogen Blau oder Heliogen Grün (BASF AG, Deutschland). Von diesen sind Cyaninderivate, Chinolinderivate, Anthrachinonderivate, Phthalocyaninderivate bevorzugt.

Füllstoffe verschieden von den Komponenten b und c können ebenfalls zugesetzt werden, sofern sie nach Art und Menge das Eigenschaftsniveau der vorliegenden Erfindung nicht beeinträchtigen. Diese können z.B. partikel-, schuppenförmigen oder faserförmigen Charakter haben. Beispielhaft seien an dieser Stelle Kreide, Bariumsulfat, Silikate/Aluminosilikate wie z.B. Glimmer/Tonschichtmineralien, Montmorillonit, insbesondere auch in einer durch Ionenaustausch modifizierten, organophilen Form, Kaolin, Zeolithe, Vermiculit, Magnesiumhydroxid und Aluminiumhydroxid genannt. Es können auch Mischungen verschiedener anorganischer Materialien zum Einsatz kommen.

Bevorzugt enthalten die Zusammensetzung keine wachsartigen Stabilisatoren.

Bevorzugt sind die weiteren Additive nur eines oder mehrere ausgewählt aus der Gruppe, bestehend aus Thermostabilisatoren, Antistatika, UV-Absorbern, IR-Absorbern, Antioxidantien, anorganischen Pigmenten, Ruß, Farbmitteln, Silikaten, insbesondere Aluminiumsilikaten, Kreide, Quarzpulver, Glimmer/Tonschichten, Montmorillonit, Aluminiumoxid, Magnesiumoxid, Siliciumdioxid (nicht gebrannt), Bariumsulfat und/oder Entformungsmittel.

Darüber hinaus können weitere Bestandteile zugesetzt werden, die nach Art des Bestandteils und Menge das Eigenschaftsniveau der vorliegenden Erfindung nicht negativ beeinträchtigen.

Es versteht sich, dass die thermoplastischen Zusammensetzungen der Substratschicht z.B. grundsätzlich auch Blendpartner enthalten können. Als Blendpartner geeignete thermoplastische Polymere sind beispielsweise Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), cyclisches Polyolefin, Poly- oder Copolyacrylatem, Poly- oder Copolymethacrylat wie z.B. Poly- oder Copolymethylmethacrylate (wie PMMA), sowie Copolymere mit Styrol wie z.B. transparentes Polystyrolacrylnitril (PSAN), thermoplastische Polyurethane und/oder Polymere auf Basis von zyklischen Olefinen (z.B. TOPAS, ein Handelsprodukt der Firma Ticona).

Erfindungsgemäß besonders bevorzugte Zusammensetzungen für die Substratschichten enthalten als Additive mindestens einen Thermostabilisator, ein Entformungsmittel und Ruß. Ganz besonders bevorzugt sind neben den Komponenten a, b, c und jeweils ein oder mehrere Thermostabilisatoren, Entformungsmittel und Ruß keine weiteren Komponenten enthalten.

Bevorzugt liegen bei der Substratschicht die CLTE-Werte, longitudinal und transversal, bestimmt nach DIN 53752-Verfahren A: 1980, bei einem Wert ≤ 46,5 ppm/K, wobei weiter bevorzugt deren Verhältnis (longitudinal/transversal) bei ≥ 0,84 liegt, und/oder
die thermische Leitfähigkeit der Substratschicht, in plane, bestimmt nach ASTM E 1461:2013, liegt bevorzugt bei ≥ 0,7 W/(m·K), weiter bevorzugt bei ≥ 0,85 W/(m·K), besonders bevorzugt bei ≥ 0,89 W/(m·K) und/oder
die thermische Leitfähigkeit der Substratschicht, through plane, bestimmt nach ASTM E 1461:2013, liegt bevorzugt bei ≥ 0,45 W/(m·K).

Bevorzugt liegt der Glanz der Substratschicht, bestimmt nach ASTM D 523-14, bei > 90°, weiter bevorzugt bei > 92°, noch weiter bevorzugt bei ≥ 94°.

Noch weiter bevorzugt liegt zudem die Vicat-Temperatur der Zusammensetzung der Substratschicht, bestimmt nach DIN ISO 306:2014-3, bei ≥ 141°C, besonders bevorzugt bei ≥ 142°C.

Aufgrund der gestellten Anforderungen sind besonders bevorzugt alle diese Eigenschaften zusammen erfüllt.

Die Herstellung der erfindungsgemäßen Zusammensetzungen der Substratschicht, enthaltend die Komponenten a bis c sowie ggf. d sowie ggf. Blendpartner, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den Komponenten b, c und ggf. d verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können hierbei die Komponenten b, c und ggf. d der erfindungsgemäßen Zusammensetzung durch bekannte Verfahren oder als Masterbatch in das Polycarbonat, ggf. in das Polycarbonat mit Blendpartner, eingebracht werden.

Die Verwendung von Masterbatchen ist zum Einbringen der Komponenten b, c und ggf. d, einzeln oder in Mischung, bevorzugt.

In diesem Zusammenhang kann die erfindungsgemäße Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann können die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Die erfindungsgemäßen Zusammensetzungen können auf üblichen Maschinen, beispielsweise auf Extrudern oder Spritzgussmaschinen, zu beliebigen Formkörpern in üblicher Weise verarbeitet werden. Bei der Herstellung der Substratschicht des erfindungsgemäßen Lagenaufbaus wird die dynamische Werkzeugtemperierung beim Spritzguss angewendet. Die Bedingungen hierfür ermittelt typischerweise der Maschinenführer im Rahmen seiner Fachkenntnisse. Bei der dynamischen Werkzeugtemperierung zur Herstellung einer Substratschicht eines erfindungsgemäßen Lagenaufbaus sind eine Massetemperatur von 300 bis 340°C, eine Werkzeugtemperatur von 140 bis 170°C, eine Einspritzgeschwindigkeit von 40 bis 80 mm/s und ein Nachdruck von 700 bis 900 bar typischerweise gewählte Bedingungen, beispielsweise eine Massetemperatur von 330°C, eine Werkzeugtemperatur von 160°C, eine Einspritzgeschwindigkeit von 40 mm/s und ein Nachdruck von 900 bar.

### Beispiele

### 1. Beschreibung der Rohstoffe und Prüfmethoden

Die in den folgenden Beispielen beschriebenen Polycarbonatzusammensetzungen wurden auf einem Co-Kneter MX58 der Fa BUSS mit einem Durchsatz von 80 kg/h durch Compoundierung hergestellt. Die Schmelzetemperatur betrug zwischen 250 - 310 °C, wobei das Knetergehäuse, Kneterwelle sowie Austragsgehäuse und Welle der Austragsschnecke eine definierte Temperatur von 260 °C hatten. Die Temperatur der Düsenplatte betrug 300 °C. Die Komponenten b wurde zusammen mit einer Pulvervormischung (Polycarbonat-Pulver + Additive) über einen Seitenextruder zugegeben, Komponente c wurde über den Haupteinzug direkt zugegeben.

| | |
|---|---|
| **Komponente a:** | Lineares Polycarbonat auf Basis von Bisphenol A mit einer Schmelze-Volumenfließrate MVR von 19 cm³/(10 min) (gemäß ISO 1133:2012-03, bei einer Prüftemperatur 300°C und 1,2 kg Belastung). |
| **Komponente b-1:** | Expandierter Graphit Ecophit^{®} GFG 900 von der Firma SGL Carbon GmbH mit einem D(0,5) von ca. 900 µm gemäß DIN 51938:2015-09. |
| **Komponente b-2:** | Expandierter Graphit SC 4000 O/SM mit einem D(0,5) von ca. 1000 µm gemäß DIN 51938:2015-09 der Firma Graphit Kropfmühl GmbH. |
| **Komponente c:** | Gebranntes Siliciumdioxid Amosil FW 600 von Quarzwerke GmbH in Frechen, unbeschlichtet, mit einer mittleren Partikelgröße D(0,5) von ca. 4 µm, D(0,98) von ca. 13 µm, einem D(0,1)/D(0,9)-Verhältnis von ca. 1,5/10 sowie einer spezifischen Oberfläche von ca. 6 m²/g, ermittelt nach DIN-ISO 9277:2014-01. |
| **Komponente c*:** | Kompaktierter Talk mit einem Talkgehalt von 98 Gew.-%, einem Eisenoxidgehalt von 1,9 Gew.-%, einem Aluminiumoxidgehalt von 0,2 Gew.-%, Glühverlust (DIN 51081/1000 °C) von 5,4 Gew.-%, pH-Wert (nach EN ISO 787-9:1995) von 9,15, D(0,5) (Sedimentationsanalyse) von 2,2 µm; BET-Oberfläche nach ISO 4652:2012-06 10 m²/g, Typ: Finntalc M05SLC, Hersteller: Mondo Minerals B. V. |
| **Komponente d-1:** | "Wachs". Ein Maleinsäureanhydrid-modifiziertes Polypropylen-Copolymer der Firma Honeywell (AC907P) mit einem mittleren Molekulargewicht (Gelpermeationschromatographie in ortho-Dichlorbenzol bei 150 °C mit Polystyrolkalibrierung) M_{w} = 20.700 g/mol, Mₙ = 1460 g/mol und mit einer Säurezahl von 78 mg KOH/g (ASTM D-1386:2015). |

Die **Vicat-Erweichungstemperatur** VST/B50 bzw. B120 als Maß für die Wärmeformbeständigkeit wurde gemäß DIN ISO 306:2014-3 an Prüfkörpern der Abmessung 8 mm x 10 mm x 4 mm mit einer Stempellast von 50 N und einer Aufheizgeschwindigkeit von 50°C/h bzw. 120°C/h mit dem Gerät Coesfeld Eco 2920 der Firma Coesfeld Materialtest bestimmt.

Die Wärmeausdehnungskoeffizienten (**CLTE**) wurden gemäß DIN 53752:1980-12 (Linearer Wärmeausdehnungskoeffizient, parallel / senkrecht, bei 23-60°C (mit einer Aufheizrate von 3K/min) gemessen.

Die **Wärmeleitfähigkeit TC in Spritzgussrichtung (in-plane)** bei 23°C wurde bestimmt gemäß ASTM E 1461:2013 an Proben mit der Dimension von 60 mm x 60 mm x 2 mm.

Die **Wärmeleitfähigkeit TC in Spritzgussrichtung (through-plane)** bei 23°C wurde bestimmt gemäß ASTM E 1461:2013 an Proben mit der Dimension von 60 mm x 60 mm x 2 mm.

Die Bestimmung der **Schmelzeviskositäten** erfolgte nach ISO 11443:2014-04 mit dem Gerät Visco-Robo 45.00 der Firma Göttfert (Kegel-Platte-Anordnung).

Die **Dichte** wurde bestimmt nach ISO 1183-1:2012.

Der **Glanz** wurde bestimmt nach ASTM D 523-14.

Die Prüfkörper, die zur Ermittlung der Oberflächenqualität genutzt wurden, wurden mittels dynamischer Werkzeugtemperierung im Spritzgussverfahren hergestellt. Die Materialien wurden dabei mit einer Massetemperatur von 330°C und einer Werkzeugtemperatur von 166°C (Heizen) und 85°C (Kühlen) verarbeitet. Die Einspritzgeschwindigkeit betrug 40 mm/s, der Nachdruck 900 bar.

Im Anschluss an die Prüfungen wurde eine **Metallschicht** nach folgendem Verfahren auf die Substratschicht aufgebracht:
Die Beschichtungsanlage bestand aus einer Vakuumkammer, bei der die Proben auf einem rotierenden Probenhalter positioniert wurden. Der Probenhalter rotierte mit ca. 20 U/min. Die Prüfkörper wurden, bevor sie in die Vakuumkammer eingebracht wurden, mit ionisierter Luft abgeblasen, um sie von Staub zu befreien. Zur Metallisierung wurde Ar-Gas mit einem Druck von 5 · 1 10⁻³ mbar eingelassen. Mittels DC-Magnetron wurde eine Aluminium-Schicht von ca. 200 nm Dicke mit einer Leistungsdichte von 6,4 W/cm² auf die Proben aufgebracht.

### 2. Rezepturen und Ergebnisse

**Tabelle 1: Erfindungsgemäße Zusammensetzungen E1 bis E4 und Vergleichsbeispiele V1 bis V7**

| **Rezeptur** | | **V1** | **V2** | **V3** | **E1** | **E2** | **E3** | **V4** | **E4** | **V5** | **V6** | **V7** |
|---|---|---|---|---|---|---|---|---|---|---|---|---|
| **a** | **Gew.-%** | 59,37 | 59,37 | 54,37 | 59,37 | 56,87 | 54,37 | 60,00 | 60,00 | 59,60 | 74,75 | 74,00 |
| **b-1** | **Gew.-%** | | 1 | 1 | 5 | 7,5 | 7,5 | 10 | | | | 5 |
| **b-2** | **Gew.-%** | | | | | | | | 5 | 10 | 5 | |
| **c** | **Gew.-%** | 40 | 39 | 44 | 35 | 35 | 37,5 | 30 | 35 | 30 | | |
| **c*** | **Gew.-%** | | | | | | | | | | 20 | 20 |
| **d-1** | **Gew.-%** | | | | | | | | | | | 1 |
| **weitere Additive d-2, d-3, d-4: (Thermostabilisator/Entformer/ Ruß)** | **Gew.-%** | 0,075/ 0,4/ 0,16 | 0,075/ 0,4/ 0,16 | 0,075/ 0,4/ 0,16 | 0,075/ 0,4/ 0,16 | 0,075/ 0,4/ 0,16 | 0,075/ 0,4/ 0,16 | | | 0,1/ 0,3/ | 0,25/- /- | |

| **Prüfungen** | | | | | | | | | | | | |
|---|---|---|---|---|---|---|---|---|---|---|---|---|
| **Schmelzeviskosität bei 300°C** | **Pa·s** | 286 | 320 | 330 | 358 | 406 | 438 | 395 | 296 | 357 | 145 | 223 |
| **TC (in plane)** | **W/(m·K)** | 0,32 | 0,49 | 0,47 | 0,96 | 1,58 | 1,71 | 1,88 | 0,89 | 1,87 | 1,7 | 1,57 |
| **TC (through plane)** | **W/(m·K)** | 0,26 | 0,36 | 0,38 | 0,47 | 0,59 | 0,61 | n.g. | n.g. | n.g. | 0,4 | n.g. |
| **VST/B50** | **[°C]** | 142 | 142 | 142 | 142 | 142 | 142 | 148 | 147 | 148 | 139 | 147 |
| **CLTE parallel (RT-60°C)** | **ppm/K** | 44 | 43 | 43 | 40 | 36 | 35 | 36 | 42 | 36 | 37 | 40 |
| **CLTE senkrecht (RT-60°C)** | **ppm/K** | 45 | 46 | 44 | 46 | 43 | 41 | 45 | 46 | 43 | 49 | 55 |
| **Verhältnis CLTEₚₐᵣₐₗₗₑₗ/CLTE_{senkrecht}** | | 0,98 | 0,93 | 0,96 | 0,87 | 0,84 | 0,84 | 0,81 | 0,90 | 0,84 | 0,76 | 0,72 |
| **Dichte** | **g/cm³** | 1,46 | 1,46 | 1,50 | 1,46 | 1,48 | 1,50 | 1,44 | 1,43 | 1,46 | 1,38 | 1,37 |
| **Glanz (bei 20°)** | **°** | 102 | n.g. | 100 | 100 | 97 | 94 | 73 | 103 | 90 | n.g. | 103 |

| | | | | | | | | | | | | |
|---|---|---|---|---|---|---|---|---|---|---|---|---|
| n.g.: nicht gemessen | | | | | | | | | | | | |

Die Wärmeleitfähigkeit einer Zusammensetzung wird über die eingebrachten Füllstoffe und deren Gewichts- bzw. Volumenanteil bestimmt. Die Füllstoff-spezifische Wärmeleitfähigkeit bestimmt dabei maßgeblich den Grad der Wärmeleitfähigkeit der Gesamtzusammensetzung. Verwendung eines niedrig thermisch leitfähigen Füllstoffes wie Quarz führt in einer Konzentration von 40 Gew.-% (V1) zu einer Gesamtwärmeleitfähigkeit (in der Ebene) von 0,32 W/mK, welche für den beabsichtigten Zweck zu gering ist. Ein großer Vorteil von Quarz als sphärischem Füllstoff ist die Einhaltung hoher Maßhaltigkeit der Zusammensetzung (ausgedrückt durch das Verhältnis von parallelem zu senkrechtem CLTE, hier 0,98). Die Zugabe bzw. teilweise Substitution des Füllstoffes durch Graphit ermöglicht eine Erhöhung der Wärmeleitfähigkeit, reduziert allerdings, durch seine plättchenförmige Partikelgeometrie, die Maßhaltigkeit der Gesamtzusammensetzung. Bei kleinen Konzentrationen Graphit (V2 und V3) ist zwar das CLTE-Verhältnis (und damit der Grad der Isotropie) immer noch sehr nahe am Idealwert (CLTEₚₐᵣₐₗₗₑₗ = CLTE_{senkrecht} = 1,0), aber die Wärmeleitfähigkeit ist, selbst bei einem Gesamtfüllstoffgehalt von 45%, nur minimal erhöht. Die Zugabe von 5 - 7,5 Gew-% Graphit (E1 - E3) bietet eine optimale Balance aus in plane Wärmeleitfähigkeit (> 0,85 W/mK) und Isotropie (≥ 0,84).

Die Wahl des Graphites hat, aufgrund von Partikelgrößenverteilungen, ebenfalls einen Einfluss auf diese Eigenschaften. So wird mit dem Graphit b2, zumindest in geringer Konzentration, eine niedrigere Wärmeleitfähigkeit erreicht (vgl. E4 und E1). Die Zusammensetzungen E3 und V5 haben zwar den gleichen CLTE-Quotienten, der höhere Füllstoffgehalt von E3 (45%) ist jedoch bevorzugt, da sich ein niedrigerer CLTE, und somit ein geringeres Schwindungsverhalten, ergibt.

Ein weiterer Nachteil hoher Graphitmengen ist die Oberflächenqualität (gemessen am Glanzgrad). Dies wird deutlich an V4 und V5, deren Glanzgrad deutlich unterhalb der anderen Zusammensetzungen mit weniger Graphit liegt. Die Kombination von Graphit und Talkum als Füllstoff (V6 und V7) führt zwar schon bei niedrigeren Gesamt-Füllstoffgehalten zu hohen Wärmeleitfähigkeiten, hat aber (durch die plättchenförmige Partikelgeometrie wie beim Graphit) den großen Nachteil der verringerten Maßhaltigkeit (siehe CLTE-Quotient). Außerdem lässt sich Talkum nur mit Hilfe eines wachsartigen Stabilisators (d) in Polycarbonat einarbeiten. Dieser Stabilisator führt allerdings bei der Verarbeitung zur Bildung von Schlieren an der Oberfläche, was sich negativ auf die Metallhaftung und die thermische Stabilität eines Reflektor-Aufbaus auswirkt.

Anhand der gezeigten Beispiele lässt sich erkennen, dass nur ein ausbalanciertes Verhältnis von Quarz und Graphit (E1-E3, E4) zu einem guten Eigenschaftskombinationsprofil von CLTE, CLTE-Quotient, Wärmeleitfähigkeit sowie Oberflächenqualität (Glanz) führt.

## Patentansprüche

1. Lagenaufbau, umfassend
i) eine Substratschicht aus einer thermoplastischen Polycarbonat-basierten Zusammensetzung und
ii) eine auf die Substratschicht i aufgebrachte Metallschicht,
**dadurch gekennzeichnet, dass**
die thermoplastische Polycarbonat-basierte Zusammensetzung der Substratschicht i die folgenden Komponenten enthält:
a) 44 bis 63 Gew.-% aromatisches Polycarbonat,
b) 3 bis 8 Gew.-% expandierten Graphit,
c) 34 bis 38 Gew.-% gebranntes Siliciumdioxid,
d) 0 bis 10 Gew.-% ein oder mehrere weitere Additive,
wobei die Gesamtmenge an expandiertem Graphit und gebranntem Siliciumdioxid mindestens 40 Gew.-% beträgt.

2. Lagenaufbau nach Anspruch 1, wobei die thermoplastische Polycarbonat-basierte Zusammensetzung der Substratschicht i
a) 54 bis 60 Gew.-% aromatisches Polycarbonat,
b) 5 bis 7,5 Gew.-% expandierten Graphit,
c) 35 bis 37,5 Gew.-% gebranntes Siliciumdioxid,
d) 0 bis 5 Gew.-% ein oder mehrere weitere Additive enthält.

3. Lagenaufbau nach Anspruch 1 oder 2, wobei die Substratschicht mittels Spritzguss unter dynamischer Werkzeugtemperierung hergestellt wurde.

4. Lagenaufbau nach einem der vorhergehenden Ansprüche, wobei der Lagenaufbau keine weiteren Schichten außer ggf. einer oder mehrerer Schutzschichten umfasst.

5. Lagenaufbau nach einem der vorhergehenden Ansprüche, wobei die thermoplastische Polycarbonat-basierte Zusammensetzung der Substratschicht i aus den Komponenten a bis c und ggf. d besteht.

6. Lagenaufbau nach einem der vorhergehenden Ansprüche, wobei die Gruppe der weiteren Additive aus der Gruppe der Flammschutzmittel, Thermostabilisatoren, Antistatika, UV-Absorber, IR-Absorber, Antidrippingmittel, Schlagzähmodifikatoren, Antioxidantien, anorganische Pigmente, Ruß, organischen Farbmittel, anorganische Füllstoffe und/oder Entformungsmitteln besteht.

7. Lagenaufbau nach einem der vorhergehenden Ansprüche, wobei der D(0,5) des expandierten Graphits 700 µm bis 1200 µm, bestimmt durch Siebanalyse gemäß DIN 51938:2015-09, beträgt.

8. Lagenaufbau nach einem der vorhergehenden Ansprüche, wobei der D(0,5) des gebrannten Siliciumdioxids 2,5 µm bis 8,0 µm, bestimmt nach ISO 13320:2009-10, beträgt.

9. Lagenaufbau nach einem der vorhergehenden Ansprüche, wobei der D(0,5) des gebrannten Siliciumdioxids 3 µm bis 5 µm, bestimmt nach ISO 13320:2009-10, beträgt.

10. Lagenaufbau nach einem der vorhergehenden Ansprüche, wobei von der Substratschicht das Verhältnis des longitudinalen und des transversalen CLTE-Wertes (longitudinal:transversal), bestimmt nach DIN 53752-Verfahren A:1980, bei ≥ 0,84 liegt und die in plane thermische Leitfähigkeit, bestimmt nach ASTM E 1461:2013, bei ≥ 0,7 W/(m·K) liegt und die Vicat-Temperatur, bestimmt nach DIN ISO 306:2014-3, bei ≥ 141°C liegt und der Glanz, bestimmt nach ASTM D 523-14, bei > 90° liegt.

11. Lagenaufbau nach einem der vorhergehenden Ansprüche, wobei die Metallschicht ii eine Dicke von > 60 nm bis < 300 nm, bestimmt mittels Rasterkraftmikroskopie, aufweist.

12. Bauteil, umfassend einen Lagenaufbau nach einem der vorhergehenden Ansprüche.

13. Bauteil nach Anspruch 12, wobei das Bauteil ein Reflektor oder ein Spiegelelement eines Head-up-Displays ist.

14. Bauteil nach Anspruch 13, wobei das Bauteil ein Scheinwerferreflektor ist.

15. Verfahren zur Herstellung eines Lagenaufbaus nach einem der Ansprüche 1 bis 11, wobei
a) aus der thermoplastischen Polycarbonat-basierten Zusammensetzung mittels Einkomponentenspritzguss mit dynamischer Werkzeugtemperierung die Substratschicht geformt wird und anschließend
b) auf diese Substratschicht eine Metallschicht aufgebracht wird.

## Claims

1. Layer structure, comprising
i) a substrate layer made of a thermoplastic polycarbonate-based composition and
ii) a metal layer applied to the substrate layer i, **characterized in that**
the thermoplastic polycarbonate-based composition of substrate layer i contains the following components:
a) 44% to 63% by weight of aromatic polycarbonate,
b) 3% to 8% by weight of expanded graphite,
c) 34% to 38% by weight of fired silicon dioxide,
d) 0% to 10% by weight of one or more further additives,
wherein the total amount of expanded graphite and fired silicon dioxide is at least 40% by weight.

2. Layer structure according to Claim 1, wherein the thermoplastic polycarbonate-based composition of substrate layer i contains
a) 54% to 60% by weight of aromatic polycarbonate,
b) 5% to 7.5% by weight of expanded graphite,
c) 35% to 37.5% by weight of fired silicon dioxide,
d) 0% to 5% by weight of one or more further additives.

3. Layer structure according to Claim 1 or 2, wherein the substrate layer has been produced by injection moulding with dynamic temperature control of the mould.

4. Layer structure according to any of the preceding claims, wherein the layer structure comprises no further layers other than optionally one or more protective layers.

5. Layer structure according to any of the preceding claims, wherein the thermoplastic polycarbonate-based composition of substrate layer i consists of components a to c and optionally d.

6. Layer structure according to any of the preceding claims, wherein the group of the further additives consists of the group of flame retardants, heat stabilizers, antistats, UV absorbers, IR absorbers, anti-dripping agents, impact modifiers, antioxidants, inorganic pigments, carbon black, organic colourants, inorganic fillers and/or mould-release agents.

7. Layer structure according to any of the preceding claims, wherein the D(0.5) of the expanded graphite is 700 µm to 1200 µm, determined by sieve analysis in accordance with DIN 51938:2015-09.

8. Layer structure according to any of the preceding claims, wherein the D(0.5) of the fired silicon dioxide is 2.5 µm to 8.0 µm, determined in accordance with ISO 13320:2009-10.

9. Layer structure according to any of the preceding claims, wherein the D(0.5) of the fired silicon dioxide is 3 µm to 5 µm, determined in accordance with ISO 13320:2009-10.

10. Layer structure according to any of the preceding claims, wherein for the substrate layer the ratio of the longitudinal and transversal CLTE value (longitudinal:transversal), determined in accordance with DIN 53752-Method A:1980, is ≥ 0.84 and the in-plane thermal conductivity, determined in accordance with ASTM E 1461:2013, is ≥ 0.7 W/(m·K) and the Vicat temperature, determined in accordance with DIN ISO 306:2014-3, is ≥ 141°C and the gloss, determined in accordance with ASTM D 523-14, is > 90°.

11. Layer structure according to any of the preceding claims, wherein the metal layer ii has a thickness of ≥ 60 nm to ≤ 300 nm, determined by atomic force microscopy.

12. Component comprising a layer structure according to any of the preceding claims.

13. Component according to Claim 12, wherein the component is a reflector or a mirror element of a head-up display.

14. Component according to Claim 13, wherein the component is a headlamp reflector.

15. Method for producing a layer structure according to any of Claims 1 to 11, wherein
a) the substrate layer is formed from the thermoplastic polycarbonate-based composition by one-component injection moulding with dynamic temperature control of the mould and then
b) a metal layer is applied to this substrate layer.

## Revendications

1. Structure stratifiée, comprenant
i) une couche de substrat constituée par une composition thermoplastique à base de polycarbonate et
ii) une couche métallique appliquée sur la couche de substrat i, **caractérisée en ce que**
la composition thermoplastique à base de polycarbonate de la couche de substrat i contient les composants suivants :
a) 44 à 63% en poids de polycarbonate aromatique,
b) 3 à 8% en poids de graphite expansé,
c) 34 à 38% en poids de dioxyde de silicium pyrogène,
d) 0 à 10 % en poids d'un ou de plusieurs autres additifs,
la quantité totale de graphite expansé et de dioxyde de silicium pyrogène représentant au moins 40% en poids.

2. Structure stratifiée selon la revendication 1, la composition thermoplastique à base de polycarbonate de la couche de substrat i contenant
a) 54 à 60% en poids de polycarbonate aromatique,
b) 5 à 7,5% en poids de graphite expansé,
c) 35 à 37,5% en poids de dioxyde de silicium pyrogène,
d) 0 à 5 % en poids d'un ou de plusieurs autres additifs.

3. Structure stratifiée selon la revendication 1 ou 2, la couche de substrat ayant été fabriquée au moyen d'un moulage par injection sous une thermorégulation dynamique d'outil.

4. Structure stratifiée selon l'une des revendications précédentes, la structure stratifiée ne comprenant pas d'autres couches à l'exception, le cas échéant, d'une ou de plusieurs couches de protection.

5. Structure stratifiée selon l'une des revendications précédentes, la composition thermoplastique à base de polycarbonate de la couche de substrat i étant constituée par les composants a à c et le cas échéant d.

6. Structure stratifiée selon l'une des revendications précédentes, le groupe des autres additifs étant constitué par le groupe des agents ignifuges, stabilisants thermiques, antistatiques, absorbants des UV, absorbants des IR, agents antigoutte, modificateurs choc, antioxydants, pigments inorganiques, suies, colorants organiques, charges inorganiques et/ou agents de démoulage.

7. Structure stratifiée selon l'une des revendications précédentes, le D(0,5) du graphite expansé étant de 700 um à 1200 um, déterminé par analyse par tamisage selon la norme DIN 51938:2015-09.

8. Structure stratifiée selon l'une des revendications précédentes, le D(0,5) du dioxyde de silicium pyrogène étant de 2,5 µm à 8,0 um, déterminé selon la norme ISO 13320:2009-10.

9. Structure stratifiée selon l'une des revendications précédentes, le D(0,5) du dioxyde de silicium pyrogène étant de 3 um à 5 um, déterminé selon la norme ISO 13320:2009-10.

10. Structure stratifiée selon l'une des revendications précédentes, le rapport de la valeur CLTE longitudinale et transversale (longitudinal:transversal) de la couche de substrat, déterminé selon la norme DIN 53752-procédé A:1980, étant ≥ 0,84 et la conductibilité thermique dans le plan, déterminée selon la norme ASTM E 1461:2013, étant ≥ 0,7 W/(m·K) et la température de Vicat, déterminée selon la norme DIN ISO 306:2014-3, étant ≥ 141°C et la brillance, déterminée selon la norme ASTM D 523-14, étant > 90°.

11. Structure stratifiée selon l'une des revendications précédentes, la couche métallique ii présentant une épaisseur de ≥ 60 nm à ≤ 300 nm, déterminée au moyen de la microscopie à force atomique.

12. Composant, comprenant une structure stratifiée selon l'une des revendications précédentes.

13. Composant selon la revendication 12, le composant étant un réflecteur ou un élément de miroir d'un affichage tête haute.

14. Composant selon la revendication 13, le composant étant un réflecteur de protection.

15. Procédé pour la fabrication d'une structure stratifiée selon l'une des revendications 1 à 11, dans lequel
a) la couche de substrat est façonnée à partir de la composition thermoplastique à base de polycarbonate, par moulage par injection à un composant, sous une thermorégulation dynamique d'outil, et ensuite
b) une couche métallique est appliquée sur cette couche de substrat.
